# EUROPEAN PATENT APPLICATION

(11) **EP 1 333 636 A1**
(43) Date of publication of application: **06.08.2003**
(21) Application number: 02075362.0
(22) Date of filing: 30.01.2002
(51) Int. Cl.: H04L 29/06, G06F 17/30

(54) **Mobile terminal and data providers for filling in electronic forms**

(71) Applicant: Koninklijke KPN N.V., 9726 AE Groningen (NL)
(72) Inventor: Van Hulten, Christian, 2628 AW Delft (NL); Zom, Pablo, 3014 DC Rotterdam (NL)
(74) Representative: Wuyts, Koenraad Maria

(57) **Abstract**

In telecommunication systems comprising mobile terminals (1) like WAP (WML) or i-Mode (cHTML) based phones and access and service providers (2,3), electronic forms originating from a service provider (3) need to be filled in by a mobile terminal's user by hand and are then sent back or forwarded to another party. These forms for example comprise fields like name, address, postal code, city, telephone number, email address, credit card number, etc. By providing the system with an access provider (2) for providing data for in response to a request transmitting the necessary data to said mobile terminal (1) and/or to said service provider (3) or another party, the user no longer needs to enter said data him/herself. The form signal may be a signal representing the form to be displayed or a code signal defining a standardised form. A new service in offering data for filling in electronic forms at least partly automatically by a trusted party has been created.

## Description

The invention relates to a telecommunication system for mobile telecommunication and comprising mobile terminals and providers, with at least one provider being a form provider for providing a form, which at least partly needs to be filled in with data.

Such a telecommunication system is generally known like for example a mobile telecommunication system in which mobile terminals communicate with service providers via access providers, which access providers for example either comprise or use network-units like for example base stations, switches, routers, bridges, servers etc.

Said form provider is generally known and for example visited by a mobile user using a mobile terminal, like for example a WAP phone based upon WML or an i-Mode phone based upon cHTML, via for example a WAP Internet connection or an i-mode Internet connection. In case of said user being interested in getting information from this form provider or another party or in doing business with this form provider or another party, the form provider sends a form to the mobile terminal. This form for example comprises fields like first name, last name, address, postal code, city, telephone number, email address, birthday, credit card number, expiration date, etc. and needs to be filled in by said user by hand with data.

The known telecommunication system is disadvantageous, inter alia, due to the entering of this kind of data via a mobile terminal being an inconvenient procedure.

It is an object of the invention, inter alia, of providing a telecommunication system according to the invention, which allows electronic forms to be dealt with in a more convenient way.

The telecommunication system according to the invention for mobile telecommunication and comprising mobile terminals and providers, with at least one provider being a form provider for providing a form which at least partly needs to be filled in with data, which form provider for example comprises a transmitting module for transmitting a form signal to at least one mobile terminal, for example comprises a data provider for providing data, which data provider for example comprises a receiving module for receiving a request signal from said mobile terminal and a transmitting module for in response to said request signal transmitting a data signal, which mobile terminal for example comprises a receiver for receiving said form signal and a transmitter for transmitting said request signal.

By providing the telecommunication system according to the invention with for example a data provider for providing data upon a user's request to the form provider or another party, the user no longer needs to enter said data him/herself. The form signal may for example be a signal representing (parts of) the form or may for example be a signal defining a standardised form.

The invention is based on the insight, inter alia, that the entering of data via mobile terminals is inconvenient, and is based upon the basic idea, inter alia, that this data could be offered as a service.

The invention solves the problem, inter alia, of providing a telecommunication system which allows electronic forms to be filled in at least partly automatically by a trusted party (the data provider).

A first embodiment of the telecommunication system according to the invention is advantageous in that said data provider for example comprises said transmitting module for transmitting said data signal to said mobile terminal, which mobile terminal for example comprises said receiver for receiving said data signal.

This for example allows said user of said mobile terminal to for example check the data before said data is sent back to the form provider or to another party.

A second embodiment of the telecommunication system according to the invention is advantageous in that said mobile terminal for example comprises said transmitter for in response to a user action transmitting said further data signal to said form provider or to another party.

This for example allows said user to for example amend the data, in which case said further data signal will be different from said data signal, or for example just to check the data without amending it, in which case said further data signal will correspond with (like for example being equal to) said data signal. Apart from this, said further data signal may further differ from said data signal in case inside said mobile terminal or between data provider and mobile terminal this data signal is amended without any user interaction (and for example due to standardised recommendations and/or irregularities).

A third embodiment of the telecommunication system according to the invention is advantageous in that said mobile terminal for example comprises said transmitter for in response to a user action transmitting a confirmation signal to said data provider, which data provider for example comprises said receiving module for receiving said confirmation signal and said transmitting module for in response to said confirmation signal transmitting a further data signal to said form provider or to another party.

This for example allows said user to amend the data, in which case said further data signal will be different from said data signal, or for example just to check the data without amending it, in which case said further data signal will correspond with (like for example being equal to) said data signal. But for both cases the (further) data signal does not need to be sent from mobile terminal to form provider, just a confirmation signal possibly comprising an amendment signal needs to be sent, the (further) data signal is sent from data provider to form provider or another party usually via a public switched network having low-cost, high-speed connections.

A fourth embodiment of the telecommunication system according to the invention is advantageous in that said form provider and said data provider each for example comprise a server for storing form signals and data signals, with said form provider being a service provider and with said data provider being an access provider.

This for example allows the access provider to be more efficiently, due to access providers usually already possessing at least some of their mobile users' personal data.

A fifth embodiment of the telecommunication system according to the invention is advantageous in that said data signal stored in an access provider's server is adaptable in response to a user action.

Now said user has for example the option to adapt his/her personal data stored in the access provider's server, for example via using a fixed terminal or a mobile terminal and visiting the access provider's web site, or sending a letter, a fax, an email, making a telephone call etc.

Embodiments of the data provider according to the invention, of the mobile terminal according to the invention, of the method according to the invention, of the processor program product according to the invention to be run via a data provider's server and of the processor program product according to the invention to be run via a mobile terminal's processor are in correspondence with embodiments of the telecommunication system according to the invention.

It is a further object of the invention to provide a data provider for use in a telecommunication system for mobile telecommunication and comprising mobile terminals and providers, with at least one provider being a form provider for providing a form which at least partly needs to be filled in with data, to a mobile terminal for use in a telecommunication system for mobile telecommunication and comprising mobile terminals and providers, with at least one provider being a form provider for providing a form which at least partly needs to be filled in with data, to a method for use in a telecommunication system for mobile telecommunication and comprising mobile terminals and providers, with at least one provider being a form provider for providing a form which at least partly needs to be filled in with data, to a processor program product to be run via a data provider's server for use in a telecommunication system for mobile telecommunication and comprising mobile terminals and providers, with at least one provider being a form provider for providing a form which at least partly needs to be filled in with data, and to a processor program product to be run via a mobile terminal's processor for use in a telecommunication system for mobile telecommunication and comprising mobile terminals and providers, with at least one provider being a form provider for providing a form which at least partly needs to be filled in with data.

In view of the above, it will be clear that further telecommunication systems, further data providers, further mobile terminals, further methods and/or further processor program products can be defined using or applying one or more of the above-described features and/or using further features in all possible combinations disclosed in the summary, without departing from the scope of this invention.

These and other aspects of the invention will be apparent from and elucidated with reference to the embodiments(s) described hereinafter.
Figure 1 discloses a telecommunication system according to the invention comprising a data provider according to the invention and a mobile terminal according to the invention, and
figure 2 discloses a block diagram illustrating a method according to the invention and a processor program product according to the invention.

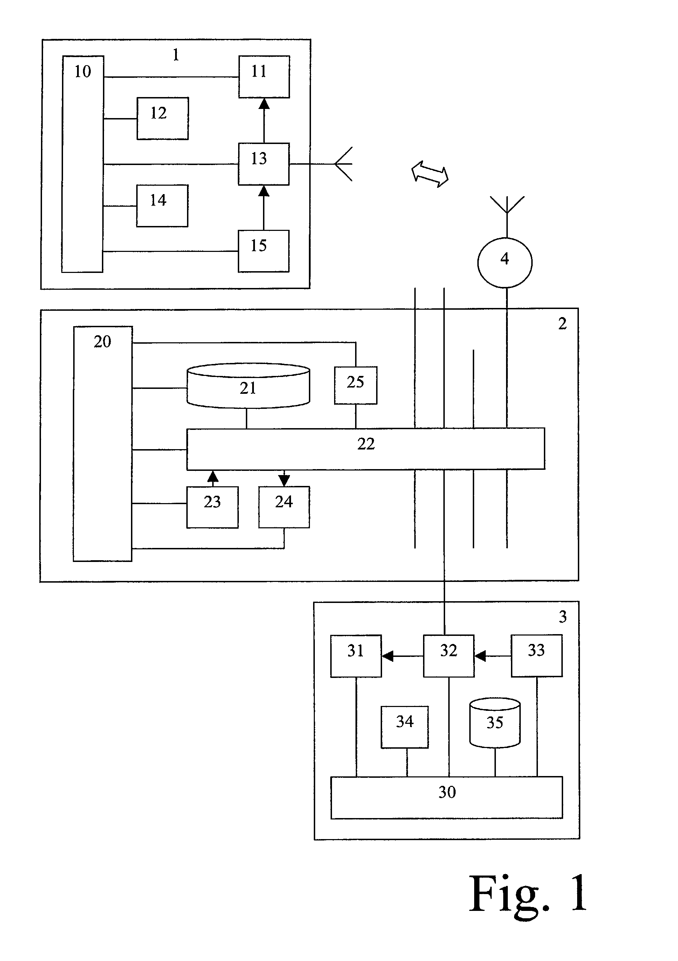

Figure 1 discloses a mobile terminal 1 according to the invention comprising a processor 10 coupled to (more general: communicating with) a receiver 11, to (with) a memory 12, to (with) an interface 13, to (with) a man-machine-interface (mmi) 14 and to (with) a transmitter 15. An input of receiver 11 is coupled to (more general: communicates with) an output of interface 13, of which an input is coupled to (more general: communicates with) an output of transmitter 15. An in/output of interface 13 is coupled to (more general: communicates with) an antenna for mobile telecommunication with an access provider 2 via a base station 4.

Access provider 2 comprises a processor 20 coupled to (more general: communicating with) a server 21, to (with) a switch 22, to (with) a transmitting module 23, to (with) a receiving module 24 and to (with) an adjusting module 25. Switch 22 is externally coupled to (more general: communicates with) base station 4 and to (with) service provider 3, and is internally coupled to (more general: communicates with) server 21, to (with) an output of transmitting module 23, to (with) an input of receiving module 24 and to (with) adjusting module 25.

Service provider 3 comprises a processor 30 coupled to (more general: communicating with) a receiving module 31, to (with) a module 34, to (with) an interface 32, to (with) a server 35 and to (with) a transmitting module 33. An input of receiving module 31 is coupled to (more general: communicates with) an output of interface 32, of which an input is coupled to (more general: communicates with) an output of transmitting module 33. An in/output of interface 32 is coupled to (more general: communicates with) switch 22.

A user using mobile terminal 1 is for example surfing the web and visiting service provider 3 via access provider 2 and base station 4. The mobile terminal 1 is for example a WAP phone based upon WML or an i-Mode phone based upon cHTML and using for example a WAP Internet connection or an i-mode Internet connection. In case of said user being interested in getting information from this service provider 3, like for example personalized information or information which is to be sent to this user's email address or home address, or in doing business with this service provider 3, the service provider 3 sends an electronic form to the mobile terminal 1, for example by sending a form signal from transmitting module 33 via interface 32 and switch 22 and base station 4, which form signal arrives via interface 13 and receiver 11 at mobile terminal 1, where said form signal is displayed via mmi 14. This form for example comprises fields like first name, last name, address, postal code, city, telephone number, email address, birthday, credit card number, expiration date, etc. and needs to be filled in by said user with data, which according to prior art used to be done by entering data via the keys of mmi 14 of the mobile terminal 1. This was an inconvenient procedure.

According to the invention, electronic forms are dealt with in a much more convenient way. Thereto, the telecommunication system comprises a data provider for providing the data automatically upon the user's request. Via mmi 14, said user (for example by using one or more keys) generates a request signal, which via processor 10 and transmitter 15 and interface 13 and base station 4 and switch 22 is sent to receiving module 24. Processor 20 is informed and controls transmitting module 23 in such a way that a data signal is transmitted.

According to a first possibility, this data signal is transmitted directly to receiving module 31 of service provider 3, via switch 22 and interface 32, where this data signal for example is stored in server 35 under control of processor 30.

According to a second possibility, this data signal is transmitted to receiver 11 of mobile terminal 1, via switch 22 and base station 4 and interface 13, where this data signal for example is temporarily stored in memory 12 and displayed via mmi 14, under control of processor 10. Now said user has the option of checking this data, and of possibly amending it, which is very advantageous.

Then, in response to a user action (for example by using one or more keys), a further data signal is transmitted directly from transmitter 15 via interface 13 and base station 4 and switch 22 to said service provider 3. In case of said user having amended the data, said further data signal will be different from said data signal, and in case of said user just having checked said data, said further data signal will correspond with (like for example being equal to) said data signal. Apart from this, said further data signal may further differ from said data signal in case inside said mobile terminal or between data provider and mobile terminal this data signal is amended without any user interaction (and for example due to standardised recommendations and/or irregularities). The direct transmission from mobile terminal 1 via switch 22 (but without intervention from receiving module 24 and transmitting module 23) to service provider 3 is advantageous in that access provider 2 is involved just once when generating said data.

Alternatively, in response to a user action (for example by using one or more keys), a confirmation signal is transmitted from transmitter 15 via interface 13 and base station 4 and switch 22 to receiving module 24 in access provider 2. Processor 20 is informed, and then controls transmitting module 23 in such a way that transmitting module 23 sends a further data signal to service provider 3. This allows said user to amend the data, in which case said further data signal will be different from said data signal, or just to check the data without amending it, in which case said further data signal will correspond with (like for example being equal to) said data signal. But for both cases the (further) data signal does not need to be sent from mobile terminal 1 to service provider 3, just either a confirmation signal or an amendment signal needs to be sent from mobile terminal 1 to access provider 2, the (further) data signal is sent from access provider 2 to service provider 3 usually via a public switched network having low-cost, high-speed connections, which is very advantageous.

Said service provider 3 and said access provider 2 comprise servers for storing form signals and data signals. This allows the access provider 2 to be more efficiently, due to access providers usually already possessing at least some of their mobile users' personal data.

According to a third possibility, said data signal stored in the access provider's server 21 is adaptable in response to a user action. Now said user has the option to adapt his/her personal data stored in the access provider's server 21. Thereto access provider 2 comprises an adjusting module 25 for making adjustments in the data stored in server 21. This adjustment module 25 can for example be remotely controlled by a user for example using a fixed terminal or a mobile terminal and visiting the access provider's web site, or is controlled by an access provider's employee after having received a letter, a fax, an email, a telephone call etc. from said user having used for example a fixed terminal or a mobile terminal.

By providing the telecommunication system according to the invention with a data provider (like for example but not exclusively an access provider) for providing data upon a user's request to for example the form provider (like fore example but not exclusively a service provider), the user no longer needs to enter said data him/herself. The form signal may be a signal representing (parts of) the form or may be a signal defining a standardised form.

The invention is based on the insight, inter alia, that the entering of data via mobile terminals is inconvenient, and is based upon the basic idea, inter alia, that this data could be offered as a service.

The invention solves the problem, inter alia, of providing a telecommunication system, which allows electronic forms to be filled in at least partly automatically by a trusted party. The electronic forms filled in are either sent back to said form provider, or to one or more other parties. When sent back to said form provider, at least the (further) data signal needs to be sent, possibly with at least a small part of said form signal, like for example a linking code (for linking data and form). When forwarded to one or more other parties, generally just the (further) data signal will not be sufficient to be sent, and will be accompanied by at least a larger part of said form signal, like for example the entire form signal or the codes described below.

Each possibility and each alternative can be combined with each other possibility and each other alternative. Each part of mobile terminal 1, access provider 2 and service provider 3, shown in the form of a block or not shown, can be 100% hardware, 100% software or a mixture of both. Each block shown or not shown can be integrated with each other block shown and/or not shown per mobile terminal, access provider and service provider, but also per combination of access provider and service provider. In addition to processors, memories and servers shown, each block can have a further processor and a further memory not shown for efficiency purposes. Interfaces 13 and 32 may be duplexers, splitters, switches etc. and may comprise buffers, converters etc.

The form signal may be a signal representing (parts of) the form for displaying (parts of) this form or may be a form code signal defining a standardised form and comprising one code defining the entire form or comprising several codes, each code for example defining one or more fields of the form. Said form signal for example further comprises an address code defining an address of the service provider and/or a destination code defining a destination of another party and/or an identification code defining the mobile terminal and/or its user.

The request signal for example comprises said identification code defining the mobile terminal and/or its user, and may further for example comprise said form code and/or said address code defining an address of the service provider and/or said destination code defining a destination of another party and/or an address code defining an address of said access provider.

The confirmation signal for example comprises said identification code defining the mobile terminal and/or its user, and may further for example comprise said form code and/or said address code defining an address of the service provider and/or said destination code defining a destination of another party and/or said address code defining an address of said access provider and/or an amendment code defining one ore more amendments.

The (further) data signal comprises data to be filled in into fields of the form, and may further comprise the signal representing (parts of) the form for displaying (parts of) this form or may comprise the form code signal defining a standardised form and comprising one code defining the entire form or comprising several codes, each code for example defining one or more fields of the form. Said (further) data signal further for example comprises said identification code defining the mobile terminal and/or its user, and may further for example comprise said address code defining an address of the service provider and/or said destination code defining a destination of another party and/or said address code defining an address of said access provider.

Of course, in mobile terminal 1, said codes will generally be added automatically to the signals, possibly in response to one or more user actions. In access provider 2 and service provider 3, said codes will generally be added automatically to the signals, as a result of the (mobile) connection between mobile terminal, access provider and service provider being already set up. In case of said access provider and said data provider not belonging to the same provider, the request signal to be sent to said data provider may involve another connection needing to be set up, possibly from access provider to data provider.

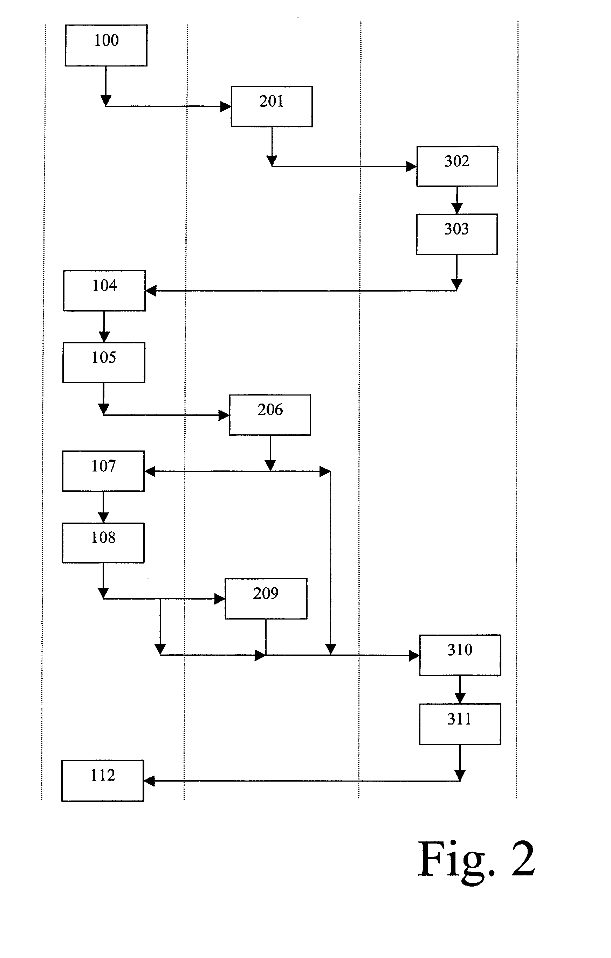

In the block diagram shown in figure 2 the blocks have the following meaning:
- Block 100: Mobile user's terminal generates an internet signal (comprising an access provider's address code like a telephone number) destined for an access provider for setting up an internet connection and then generates a service provider's address code (like for example a URL);
- Block 201: Access provider receives said internet signal and sets up an internet connection with said service provider;
- Block 302: Service provider is visited by the mobile terminal's user who shows interest in getting information and/or doing business with said service provider;
- Block 303: Service provider sends form signal to mobile user's terminal via the access provider;
- Block 104: Mobile user's terminal receives said form signal, which needs to be filled in with data;
- Block 105: Mobile user's terminal sends request signal to said access provider for automatic generation of said data;
- Block 206: Access provider receives said request signal and generates a data signal which either is sent to said mobile user's terminal or is sent to the service provider:
- Block 107: Mobile user's terminal receives said data signal and has the possibility of checking and/or amending the data;
- Block 108: Mobile user's terminal generates a confirmation signal possibly comprising an amendment signal which either together with said data signal is sent to the service provider or which possibly together with said data signal is sent to the access provider;
- Block 209: Access provider receives said confirmation signal possibly comprising said amendment signal possibly together with said data signal and sends said possibly amended data signal to the service provider;
- Block 310: Service provider receives said data signal comprising the data for filling in the electronic form;
- Block 311: Service provider sends a report signal to the mobile user's terminal for reporting the reception of the data;
- Block 112: Mobile user's terminal receives said report signal and now has the options of visiting other services of this service provider or visiting other service providers (possibly integrated with the access provider or via the access provider's portal etc.) or finishing the internet connection.
So, different features can be found in this invention, like for example
- the telecommunication system for mobile telecommunication and comprising mobile terminals (1) and providers (2,3),
- with at least one provider (3) being a form provider (3) for providing a form which at least partly needs to be filled in with data,
- the form provider (3) comprising a transmitting module (33) for transmitting a form signal to at least one mobile terminal (1),
- said telecommunication system comprising a data provider (2) for providing data,
- the data provider (2) comprising a receiving module (24) for receiving a request signal from said mobile terminal (1) and a transmitting module (23) for in response to said request signal transmitting a data signal,
- the mobile terminal (1) comprising a receiver (11) for receiving said form signal and a transmitter (15) for transmitting said request signal,
- said data provider (2) comprising said transmitting module (23) for transmitting said data signal to said mobile terminal (1),
- the mobile terminal (1) comprising said receiver (11) for receiving said data signal,
- said mobile terminal (1) comprising said transmitter (15) for in response to a user action transmitting a further data signal,
- said mobile terminal (1) comprising said transmitter (15) for in response to a user action transmitting a confirmation signal to said data provider (2),
- the data provider (2) comprising said receiving module (24) for receiving said confirmation signal and said transmitting module (23) for in response to said confirmation signal transmitting a further data signal,
- said form provider (3) and said data provider (2) each comprising a server (35,21) for storing form signals and data signals,
- with said form provider (3) being a service provider (3) and with said data provider (2) being an access provider (2),
- said data signal stored in an access provider's server (21) being adaptable in response to a user action.

In view of the above, it will be clear that further telecommunication systems, further data providers, further mobile terminals, further methods and/or further processor program products can be defined using one or more of the above-described features and/or using further features disclosed in the introduction and/or in the description of the drawings, without departing from the scope of this invention.

## Claims

1. Telecommunication system for mobile telecommunication and comprising mobile terminals (1) and providers (2,3), with at least one provider (3) being a form provider (3) for providing a form which at least partly needs to be filled in with data, which form provider (3) comprises a transmitting module (33) for transmitting a form signal to at least one mobile terminal (1), wherein said telecommunication system comprises a data provider (2) for providing data, which data provider (2) comprises a receiving module (24) for receiving a request signal from said mobile terminal (1) and a transmitting module (23) for in response to said request signal transmitting a data signal, which mobile terminal (1) comprises a receiver (11) for receiving said form signal and a transmitter (15) for transmitting said request signal.

2. Telecommunication system according to claim 1, wherein said data provider (2) comprises said transmitting module (23) for transmitting said data signal to said mobile terminal (1), which mobile terminal (1) comprises said receiver (11) for receiving said data signal.

3. Telecommunication system according to claim 2, wherein said mobile terminal (1) comprises said transmitter (15) for in response to a user action transmitting a further data signal.

4. Telecommunication system according to claim 2, wherein said mobile terminal (1) comprises said transmitter (15) for in response to a user action transmitting a confirmation signal to said data provider (2), which data provider (2) comprises said receiving module (24) for receiving said confirmation signal and said transmitting module (23) for in response to said confirmation signal transmitting a further data signal.

5. Telecommunication system according to claim 3 or 4, wherein said form provider (3) and said data provider (2) each comprise a server (35,21) for storing form signals and data signals, with said form provider (3) being a service provider (3) and with said data provider (2) being an access provider (2).

6. Telecommunication system according to claim 5, wherein said data signal stored in an access provider's server (21) is adaptable in response to a user action.

7. Data provider (3) for use in a telecommunication system for mobile telecommunication and comprising mobile terminals (1) and providers (2,3), with at least one provider (3) being a form provider (3) for providing a form which at least partly needs to be filled in with data, which form provider (3) comprises a transmitting module (33) for transmitting a form signal to at least one mobile terminal (1), wherein said telecommunication system comprises said data provider (2) for providing data, which data provider (2) comprises a receiving module (24) for receiving a request signal from said mobile terminal (1) and a transmitting module (23) for in response to said request signal transmitting a data signal, which mobile terminal (1) comprises a receiver (11) for receiving said form signal and a transmitter (15) for transmitting said request signal.

8. Mobile terminal for use in a telecommunication system for mobile telecommunication and comprising mobile terminals (1) and providers (2,3), with at least one provider (3) being a form provider (3) for providing a form which at least partly needs to be filled in with data, which form provider (3) comprises a transmitting module (33) for transmitting a form signal to at least one mobile terminal (1), wherein said telecommunication system comprises a data provider (2) for providing data, which data provider (2) comprises a receiving module (24) for receiving a request signal from said mobile terminal (1) and a transmitting module (23) for in response to said request signal transmitting a data signal, which mobile terminal (1) comprises a receiver (11) for receiving said form signal and a transmitter (15) for transmitting said request signal.

9. Method for use in a telecommunication system for mobile telecommunication and comprising mobile terminals and providers, with at least one provider being a form provider for providing a form which at least partly needs to be filled in with data, which form provider comprises a transmitting module for transmitting a form signal to at least one mobile terminal, wherein said telecommunication system comprises said data provider for providing data, which method comprises the steps of receiving a request signal from said mobile terminal and of in response to said request signal transmitting a data signal, which mobile terminal comprises a receiver for receiving said form signal and a transmitter for transmitting said request signal.

10. Method according to claim 9, wherein said method comprises the steps of transmitting a form signal from said form provider to at least one mobile terminal and of receiving a data signal.

11. Processor program product to be run via a data provider's server for use in a telecommunication system for mobile telecommunication and comprising mobile terminals and providers, with at least one provider being a form provider for providing a form which at least partly needs to be filled in with data, which form provider comprises a transmitting module for transmitting a form signal to at least one mobile terminal, wherein said telecommunication system comprises said data provider for providing data, which processor program product comprises a receiving function for receiving a request signal from said mobile terminal and a transmitting function for in response to said request signal transmitting a data signal, which mobile terminal comprises a receiver for receiving said form signal and a transmitter for transmitting said request signal.

12. Processor program product to be run via a mobile terminal's processor for use in a telecommunication system for mobile telecommunication and comprising mobile terminals and providers, with at least one provider being a form provider for providing a form which at least partly needs to be filled in with data, which form provider comprises a transmitting module for transmitting a form signal to at least one mobile terminal, wherein said telecommunication system comprises a data provider for providing data, which data provider comprises a receiving module for receiving a request signal from said mobile terminal and a transmitting module for in response to said request signal transmitting a data signal, which processor program product comprises a receiving function for receiving said form signal and a transmitting function for transmitting said request signal.
